(19) Europäisches Patentamt
European Patent Office
Office européen des brevets

(11) EP 2 681 541 B1

(12) # FASCICULE DE BREVET EUROPEEN

(45) Date de publication et mention de la délivrance du brevet:
**29.04.2015 Bulletin 2015/18**

(21) Numéro de dépôt: **12708293.1**

(22) Date de dépôt: **02.03.2012**

(51) Int Cl.:
***G01N 27/22*** (2006.01) ***B01J 20/32*** (2006.01)
*G01N 27/12* (2006.01)

(86) Numéro de dépôt international:
**PCT/EP2012/053670**

(87) Numéro de publication internationale:
**WO 2012/117104 (07.09.2012 Gazette 2012/36)**

(54) **CAPTEUR D'HUMIDITE COMPRENANT COMME COUCHE ABSORBANTE D'HUMIDITE UNE COUCHE POLYMERIQUE COMPRENANT UN MELANGE DE POLYAMIDES**

FEUCHTIGKEITSSENSOR MIT EINER POLYMERSCHICHT ENTHALTEND EINE MISCHUNG VON POLYAMIDEN ALS FEUCHTIGKEITSABSORBIERENDE SCHICHT

MOISTURE SENSOR INCLUDING, AS A MOISTURE-ABSORBING LAYER, A POLYMER LAYER INCLUDING A MIXTURE OF POLYAMIDES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.03.2011 FR 1151735**

(43) Date de publication de la demande:
**08.01.2014 Bulletin 2014/02**

(73) Titulaire: **Commissariat à l'Énergie Atomique et aux Énergies Alternatives**
**75015 Paris (FR)**

(72) Inventeur: **GRANGE, Hubert**
**F-38100 Grenoble (FR)**

(74) Mandataire: **Ahner, Philippe et al**
**BREVALEX**
**95, rue d'Amsterdam**
**75378 Paris Cedex 8 (FR)**

(56) Documents cités:
**JP-A- 7 027 733**
**JP-A- 60 066 143**
**US-A- 3 891 958**
**US-A- 5 369 995**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### DOMAINE TECHNIQUE

La présente invention a trait à un capteur d'humidité, qui présente de forts taux d'absorption de l'eau, une bonne sensibilité entre 0 et 100% d'humidité relative ainsi qu'une bonne stabilité de cette sensibilité dans le temps.

Les capteurs d'humidité de l'invention peuvent trouver application dans de nombreux domaines, où un contrôle de l'humidité s'avère nécessaire, parmi lesquels on peut citer :

- le domaine de l'agriculture, où un taux d'humidité donné, notamment dans des serres, peut être prépondérant pour le développement de cultures ;
- le domaine de l'agroalimentaire, où une humidité trop élevée peut accélérer l'altération de stocks ainsi que le développement de moisissures ;
- le domaine pharmaceutique, où, notamment, le taux d'humidité des produits pharmaceutiques se présentant sous forme de poudres doit être étroitement contrôlé ;
- le domaine électronique, où il est essentiel de pouvoir contrôler le taux d'humidité dans les salles blanches et également de pouvoir détecter la présence de fuites dans les composants électroniques encapsulés ;
- le domaine de l'industrie chimique, telle que l'industrie de production de céramique, où il est nécessaire de contrôler l'humidité dans le cadre du séchage des pièces avant cuisson ou telle que l'industrie papetière ou encore l'industrie impliquant l'utilisation de gaz pour la synthèse de produits chimiques, où un taux d'humidité trop important dans ces gaz peut entraîner un changement de composition chimique desdits produits ;
- le domaine du transport et des biens de consommation courants, tels que l'automobile, l'aviation, l'électroménager (en particulier, les sèche-linge) ;
- le domaine médical, par exemple, pour le contrôle de l'humidité de l'air expiré, la détection de fuites dans un système fluidique de traitement du sang ;
- le domaine de la conservation des oeuvres d'art, où il est important de contrôler le taux d'humidité des locaux dans lesquels elles sont entreposées (par exemple, les salles de musée) pour éviter toute dégradation de celles-ci.

### ÉTAT DE LA TECHNIQUE ANTÉRIEURE

Eu égard aux nombreux domaines d'application susmentionnés, la détection et/ou la mesure de l'humidité (connue sous le terme scientifique d'hygrométrie) a fait l'objet de nombreuses études et recherches, qui ont abouti à l'élaboration d'appareils de mesure de l'humidité (désignés également sous le terme d'hygromètres ou capteurs d'humidité), et plus particulièrement de l'humidité relative, qui désigne le rapport entre la quantité de vapeur d'eau contenue dans un milieu donné et la quantité qui pourrait y être contenue au maximum (qui correspond au point de saturation) à une température donnée, ce rapport étant exprimé par une valeur HR variant de 0 à 100%.

Pour être efficace et fiable, les hygromètres doivent répondre idéalement au cahier des charges suivant :

- un temps de réponse très court (par exemple, inférieur à 2 minutes) ;
- une réponse linéaire en fonction de l'humidité relative (HR) entre 0 et 100% ;
- une faible hystérésis ;
- un faible coefficient de température ;
- une plage de fonctionnement en température importante, de préférence, comprise entre -20°C à 80°C ;
- une stabilité de mesure dans le temps (notamment après stockage de l'hygromètre à atmosphère ambiante, à faible humidité, à forte humidité et/ou en milieu agressif).

Les hygromètres peuvent faire appel à une grande diversité de paramètres, compte tenu de la diversité des phénomènes physiques, dans lesquels la vapeur d'eau joue un rôle, chacun d'eux conduisant à des moyens de mesure spécifiques de l'humidité.

Parmi les hygromètres les plus couramment usités, on peut distinguer ceux basés sur le principe de mesure directe de l'humidité, ce qui est le cas des hygromètres à condensation, de ceux basés sur le principe de mesure d'une propriété d'un corps lié à l'humidité, ce qui est le cas des hygromètres à variation d'impédance.

Concernant les hygromètres à condensation, ils consistent précisément à pratiquer la mesure du point de rosée de l'air (à savoir, la température à laquelle l'air humide arrive à saturation, soit, en d'autres termes, la température à laquelle la vapeur d'eau qu'il contient se condense sous forme liquide). Pour ce faire, il s'agit de prélever un échantillon de l'air, pour lequel on veut déterminer l'humidité relative, et de l'amener, par exemple, au contact d'un miroir que l'on refroidit et dont on mesure la température. Lorsque cette température atteint le point de rosée, l'humidité présente dans l'air se condense et le faisceau lumineux, qui vient frapper le miroir, ne peut plus être réfléchi ou bien encore est réfléchi

avec un angle de réflexion modifié. La mesure de la température à l'instant d'interruption ou de modification du faisceau permet d'accéder à la température de rosée et ensuite à l'humidité relative de l'air.

En pratique, ce type d'hygromètre présente un temps de réponse élevé, car le capteur de température présent dans l'hygromètre n'est généralement pas en contact direct avec le miroir, dont il doit déterminer la température, ce qui implique d'attendre, parfois, de nombreuses minutes avant d'obtenir une valeur limite de température du miroir.

Concernant les hygromètres à variation d'impédance, ils sont basés sur l'utilisation d'un élément sensible comprenant une substance hygroscopique, dont on mesure les variations de propriété électrique en fonction de l'humidité ambiante.

Selon que la propriété électrique, dont on mesure la variation, correspond à la résistance électrique ou à la capacité, on distingue respectivement les hygromètres résistifs des hygromètres capacitifs.

Pour les hygromètres résistifs, il est procédé au dépôt sur un substrat d'une quantité de substance hygroscopique suivant un motif constituant une résistance. Deux électrodes sont reliées à ce motif, la résistance entre les électrodes dépendant de la teneur en eau et de la température, ce qui permet d'accéder au taux d'humidité du milieu dans lequel ces hygromètres sont placés, sachant que plus la quantité d'eau est importante, plus la résistance électrique diminue. Un tel hygromètre est connu de JP 60066143.

Enfin, pour les hygromètres capacitifs, une couche de matériau diélectrique, apte à absorber l'humidité environnante, est localisée entre deux électrodes, formant ainsi un condensateur. Lorsque l'humidité varie, la quantité d'eau absorbée par ladite couche varie également, ce qui entraîne une modification de la constante diélectrique de cette couche, et une variation de la capacité du condensateur, que l'on mesure, la valeur de capacité mesurée permettant d'accéder à la teneur en humidité de l'environnement dans lequel est placé l'hygromètre capacitif.

Les matériaux diélectriques utilisés peuvent être des matériaux inorganiques poreux, tels que du silicium poreux, de l'alumine $Al_2O_3$, de la silice $SiO_2$, l'utilisation de tels matériaux engendrant, toutefois, un phénomène d'hystérésis important, du fait du phénomène de condensation capillaire se produisant pour des humidités relatives comprises entre 55 et 97% HR pour des matériaux inorganiques présentant classiquement un diamètre de pores allant de 2 à 50 nm. Ils peuvent ainsi avantageusement n'être utilisés que pour des mesures à faible humidité (par exemple, des humidités relatives inférieures à 20% HR).

Les matériaux diélectriques utilisés peuvent être également des matériaux organiques, en particulier des matériaux polymères, qui sont, classiquement, plus avantageux concernant la linéarité de réponse et les phénomènes d'hystérésis que celle des matériaux inorganiques.

Ces matériaux polymères sont classiquement choisis pour leur capacité à constituer des matériaux diélectriques à faible taux d'absorption, de telle manière que la vapeur d'eau ait plus de facilité à la désorption lors du passage d'un environnement à forte humidité relative à un environnement à faible humidité relative, des matériaux correspondant à ces critères et couramment utilisés appartenant à la famille des acétobutyrates de cellulose, des polyimides, des polysulfones ou des polyéthersulfones.

Toutefois, ces matériaux présentent certains inconvénients, parmi lesquels on peut citer :

- une faible sensibilité aux faibles valeurs d'humidité (par exemple, de 0 à 5% HR) pour les hygromètres capacitifs, comportant comme matériau diélectrique des acétobutyrates de cellulose, des polyimides, des polysulfones ou des polyéthersulfones ;
- un temps de stabilisation très longs pour des acétobutyrates de cellulose et des polyimides ;
- un important phénomène d'hystérésis pour des humidités relatives supérieures à 8%, lorsque le matériau diélectrique utilisé comprend des acétobutyrates de cellulose ou des polyimides après des temps d'attente de 30 minutes pour chaque mesure d'humidité dans le sens croissant ou décroissant.

Il subsiste donc un besoin pour un capteur d'humidité (ou hygromètre) à matériau absorbant polymère qui puisse surmonter les inconvénients susmentionnés et, en particulier, qui puisse présenter les avantages suivants :

- une stabilité de la sensibilité dans le temps ;
- une sensibilité élevée supérieure à celle des capteurs impliquant l'utilisation de polymères tels que des polyimides, des acétobutyrates de cellulose et des polyéthersulfones, ce qui permettra une mesure de très faibles taux d'humidité (par exemple, allant de 0 à 5% d'humidité relative) et une plus grande précision de mesure sur la plage allant de 0 à 100% d'humidité relative ;
- des temps de réponse très courts ;
- une faible hystérésis.

## EXPOSÉ DE L'INVENTION

Ainsi, l'invention a trait à un capteur d'humidité comprenant, comme couche absorbante d'humidité, une couche

polymérique comprenant un mélange polymérique comprenant un premier polyamide et un deuxième polyamide, ledit deuxième polyamide comprenant, dans ses unités répétitives, un nombre d'atomes de carbone supérieur à celui des unités répétitives du premier polyamide.

Avant d'entrer plus en détail dans l'exposé de l'invention, nous précisons les définitions suivantes.

Par unité répétitive, on entend un groupe bivalent issu d'un composé après polycondensation de celui-ci.

Par polyamide, on entend un polycondensat contenant, dans sa chaîne principale, des groupes amides -C(=O)-NH- résultant classiquement d'une étape de polycondensation entre les fonctions amines et acide carboxylique de composés comportant ces fonctions.

Ainsi, en élaborant des capteurs comprenant, comme couche absorbante d'humidité, une couche comprenant un mélange de polyamides distincts (dont le deuxième polyamide présente, dans ses unités répétitives, un nombre de carbone plus important que celui du premier polyamide, en particulier, un nombre de groupe $-CH_2-$ plus important que celui du premier polyamide), les auteurs de la présente invention ont pu mettre en évidence, de façon surprenante, que les capteurs résultants présentent une sensibilité et une stabilité dans le temps supérieures à celles de capteurs comportant, dans leurs couches absorbantes d'humidité, uniquement ledit premier polyamide ou ledit deuxième polyamide et notamment une diminution voire une élimination du phénomène de cristallisation qui pourrait engendrer une dérive irréversible de la sensibilité des capteurs.

Sans être lié par la théorie, la stabilité de la sensibilité des capteurs de l'invention peut s'expliquer par la stabilité de la proportion des zones cristallines par rapport aux zones amorphes qui ne cristallisent pas sous l'influence de l'humidité, comme cela serait le cas avec des capteurs comportant dans leur couche absorbante uniquement un seul polyamide. Ainsi, le taux d'absorption des capteurs de l'invention se révèle stable, même après des cyclages en température et humidité ou après des séjours de longues durées à haute ou basse humidité. Qui plus est, l'utilisation d'un mélange de polyamides tel que défini ci-dessus confère à la couche absorbante une souplesse, qui reste stable dans le temps, ce qui limite les risques de fracture rencontrés pour les polymères ou mélanges de polymères, qui ont tendance à cristalliser et ainsi à durcir au cours du temps.

Plus spécifiquement, la couche polymérique peut être uniquement constituée de polyamides.

Conformément à l'invention, le premier polyamide peut être choisi parmi le polyamide 6, le polyamide 6-6, le polyamide 11 et le deuxième polyamide peut être choisi parmi le polyamide 6-6, le polyamide 6-10 et le polyamide 12, sachant que, conformément à la condition énoncée ci-dessus, le premier polyamide sera choisi dans la liste susmentionnée de sorte que, dans ses unités répétitives, le nombre d'atomes de carbone soit inférieur à celui du deuxième polyamide.

On précise que :

- le polyamide 6 est un polyamide classiquement obtenu par polycondensation d'acide caproïque et d'hexaméthylènediamine conduisant à un polyamide comprenant un enchaînement d'unités répétitives de formule suivante :

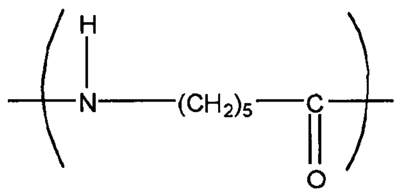

- le polyamide 6-6 est un polyamide classiquement obtenu par polycondensation d'acide adipique et d'hexaméthylènediamine conduisant ainsi à un polyamide comprenant un enchaînement d'unités répétitives de formule suivante :

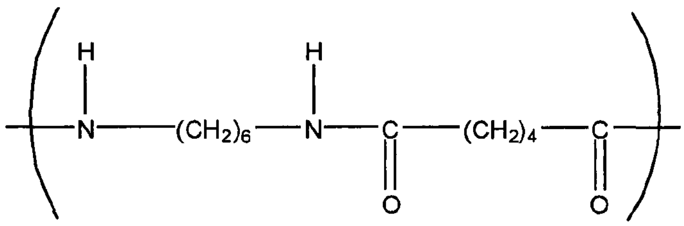

- le polyamide 6-10 est un polyamide classiquement obtenu par polycondensation d'acide sébaçique et d'hexaméthylènediamine conduisant ainsi à un polyamide comprenant un enchaînement d'unités répétitives de formule suivante :

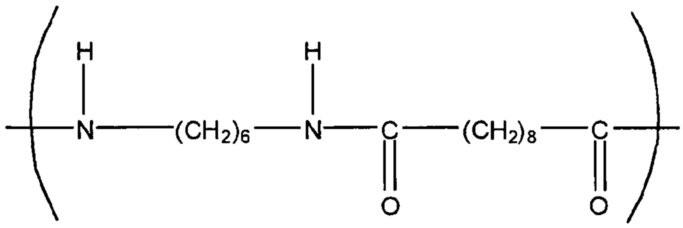

- le polyamide 11 est un polyamide classiquement obtenu par polycondensation d'acide aminoundécanoïque conduisant ainsi à un polyamide comprenant un enchaînement d'unités répétitives de formule suivante :

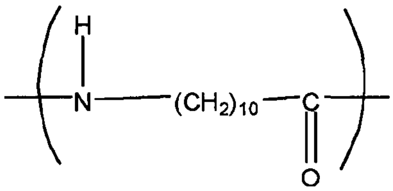

- le polyamide 12 est un polyamide classiquement obtenu par polycondensation d'acide aminododécanoïque conduisant ainsi à un polyamide comprenant un enchaînement d'unités répétitives de formule suivante :

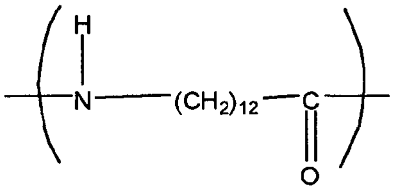

Plus spécifiquement, la couche polymérique peut comprendre un mélange choisi parmi les mélanges suivants :

- un mélange de polyamide 6 et de polyamide 6-6 ;
- un mélange de polyamide 6 et de polyamide 6-10 ;
- un mélange de polyamide 6-6 et de polyamide 6-10 ;
- un mélange de polyamide 11 et de polyamide 12,
  et de préférence,
- un mélange de polyamide 6 et de polyamide 6-6 (par exemple, selon une proportion massique de 50/50).

Dans les mélanges utilisables dans le cadre de l'invention, la proportion massique du premier polyamide par rapport au deuxième polyamide peut aller de 95/5 à 5/95, par exemple, peut être de 50/50.

Outre la présence d'un premier polyamide et d'un deuxième polyamide, la couche polymérique peut comprendre d'autres polyamides, tels qu'un troisième polyamide, un quatrième polyamide et/ou un cinquième polyamide.

Les capteurs de l'invention peuvent être des capteurs capacitifs ou résistifs, auquel cas il pourra comporter au moins une couche polymérique telle que définie ci-dessus disposée entre une première électrode et une deuxième électrode, lesquelles première électrode et deuxième électrode peuvent être en contact avec un même substrat.

Ledit support peut être en verre ou en un matériau semi-conducteur, tel que du silicium, éventuellement recouvert d'une couche isolante de l'électricité, par exemple, en oxyde de silicium $SiO_2$, de sorte à limiter les courants de fuite.

La première électrode déposée sur ledit éventuel support peut être en un matériau conducteur de l'électricité, tel qu'un matériau métallique comme le tantale.

La deuxième électrode, quant à elle, est également avantageusement en un matériau conducteur de l'électricité, tel qu'un matériau métallique et qui plus est, présente, avantageusement, une porosité de nature à permettre à l'humidité environnante de traverser ladite deuxième électrode et d'arriver au contact de la couche polymérique. Le matériau conducteur de l'électricité peut se présenter sous forme d'une superposition de couches métalliques, telle qu'une couche en chrome, une couche en nickel et une couche en or.

Avec de tels capteurs, la détection de l'humidité pourra être effectuée par mesure de variation de la capacité ou de la résistance du capteur.

En effet, l'humidité au contact de la couche polymérique va engendrer une modification de sa constante diélectrique, se traduisant par une variation de capacité du capteur, à laquelle l'on peut relier une valeur d'humidité relative, qui correspond à celle de l'environnement, dans lequel est placé ledit capteur.

Les capteurs de l'invention peuvent également se présenter sous forme d'un capteur comportant une poutre ou membrane recouverte, en tout ou partie, par une couche polymérique telle que définie ci-dessus.

Avec de tels capteurs, la détection de l'humidité pourra être effectuée :

- par mesure de la variation de fréquence de résonance de ladite poudre ou membrane, ladite variation étant fonction de la masse d'humidité absorbée, auquel le capteur pourra être considéré comme un capteur du type cMUT (abréviation correspondant à la terminologie anglo-saxonne « Capacitive Micromachined Ultrasonic Transducers ») ;
- par mesure de l'onde de surface induite par l'absorption d'humidité par ladite couche polymérique ; ou
- par mesure de la déformation de ladite poudre ou membrane, induite par l'absorption d'humidité par ladite couche polymérique, laquelle absorption engendre une plastification du matériau de ladite couche, qui génère une modification de la courbure de ladite poutre ou membrane, qui pourra être détectée, par exemple, par une méthode piézorésistive, capacitive ou optique.

Les capteurs de l'invention vont trouver application dans tous les domaines, où il est nécessaire de détecter la présence d'humidité voire de connaître la quantité d'humidité présente dans un environnement, ce qui est le cas du domaine de l'agriculture, du domaine de l'agroalimentaire, du domaine pharmaceutique, du domaine électronique, du domaine de l'industrie chimique, du domaine du transport et des biens de consommation courants, du domaine médical, du domaine de la conservation des oeuvres d'art.

Plus particulièrement, concernant le domaine de l'électronique, les capteurs de l'invention peuvent être utilisés en vue de détecter des fuites dans les composants encapsulés sous vide ou sous azote, tels que des capteurs du type accéléromètre, gyromètre ou de pression, ces capteurs étant classiquement protégés par un capot généralement en silicium scellé par un cordon de résine, un cordon de verre fusible ou un cordon en alliage eutectique ou un capot intégré réalisé en polysilicium. Pour ce type de composants, les capteurs de l'invention vont permettre de détecter les fuites dès les premiers ppm, car l'humidité contenue dans l'atmosphère ambiante de salle climatisée de montage de composants (allant classiquement de 20 à 40% d'humidité relative) diffusera dans la couche absorbante d'humidité des capteurs dès l'apparition d'une fuite.

L'invention va maintenant être décrite par rapport aux modes de réalisation décrits ci-dessus et fournis à titre illustratif et non limitatif.

## BRÈVE DESCRIPTION DES DESSINS

La figure 1 représente un capteur d'humidité du type capacitif conforme à l'invention.

La figure 2 est un graphique illustrant l'évolution de la déviation D en fonction du temps t (en s) pour un capteur conforme à l'invention ayant subi un changement d'humidité relative allant de 11% à 97% HR (courbe a) et ayant subi un changement d'humidité relative allant de 97% à 11% HR (courbe b).

La figure 3 est un graphique illustrant l'évolution de la fréquence F en fonction du temps t (en h) pour un capteur conforme à l'invention subissant un cyclage en terme d'humidité relative tel qu'illustré sur cette figure (ce cyclage correspondant à l'application d'un cycle A tel qu'explicité ci-dessous).

La figure 4 est un graphique illustrant l'évolution de la variation d'hystérésis (respectivement courbes H1 et H2) (en ordonnée positive) en fonction du temps t (en mois) et l'évolution de la sensibilité S (en %) (courbe dénommée S) (en ordonnée négative) en fonction du temps t (en mois) pour des capteurs à base de polyamide 6 ou de polyamide 6-6 ayant subi des cyclages spécifiques tels qu'explicité ci-dessous.

## EXPOSÉ DÉTAILLÉ DE MODES DE RÉALISATION PARTICULIERS

EXEMPLE DE REALISATION D'UN CAPTEUR D'HUMIDITE CONFORME A L'INVENTION

Un mélange de polyamides a été préparé à partir de 1 g de polyamide 6 et 1 g de polyamide 6-6, dissous dans 40 $cm^3$ d'acide formique. Le mélange est ensuite déposé par enduction centrifuge à 3000 tours/min sur l'électrode en tantale anodisé appartenant à un capteur d'humidité conforme à l'invention 1 représenté sur la figure 1 annexée, ce capteur comprenant respectivement :

- un substrat 3 en verre présentant les dimensions suivants :50 mm * 50 mm ;

- ladite électrode en tantale 5 (dite première électrode) anodisé déposée à travers un premier pochoir sur une face dudit substrat, ladite électrode présentant une épaisseur de 250 nm ;
- une électrode de contact 7 comprenant la superposition d'une couche en chrome (de 20 nm d'épaisseur), d'une couche en nickel (de 200 nm d'épaisseur) et d'une couche en or (de 100 nm d'épaisseur), déposée également sur ledit substrat à travers un deuxième pochoir.

La couche de mélange ainsi déposée (numérotée 9 sur la figure 1) subit un traitement thermique sur plaque chauffante à 80°C pendant 2 minutes, de sorte à éliminer le solvant organique, suivie d'un recuit à 250°C sous vide pendant 1 heure avec refroidissement rapide sous azote.
Une couche en chrome poreux (numérotée 11 sur la figure 1) d'une épaisseur de 20 nm a ensuite été déposée, à travers un troisième pochoir, par évaporation sous vide à une vitesse de 1nm/seconde après gravure mécanique de la couche polymère au niveau de l'électrode de contact 7, la gravure mécanique se faisant avec un outil en acier, de sorte à enlever la couche polymérique par raclage.
Cette couche en chrome poreux est en contact avec l'électrode de contact 7 grâce aux trous existant dans la couche polymérique, l'ensemble formé par cette couche et cette électrode de contact formant une deuxième électrode 13.
En variante, il aurait pu être envisagé de déposer une couche en chrome poreux à la fois sur la première électrode et l'électrode de contact, moyennant quoi l'on aurait obtenu deux capacités verticales montées en série.
Le capteur obtenu selon le procédé décrit ci-dessus, qui forme une capacité verticale, est soumis à des tests en humidité.
Pour ce faire, le capteur est monté dans un oscillateur, de sorte à pouvoir mesurer les variations de capacité du condensateur lorsque ce dernier est soumis à un changement d'humidité.
Ces mesures de variation de capacité du condensateur, dans le cas où le capteur est monté dans un oscillateur avec une fréquence de base de l'ordre de 100 kHz montrent que l'on obtient des temps de réponse très rapides pour une humidité relative passant de 11% à 97% HR et pour une humidité relative passant de 97% à 11% HR.
En effet, comme l'attestent les résultats reportés sur la figure 2 représentant l'évolution de la déviation D en fonction du temps t (exprimé en secondes) pour un changement d'humidité relative allant de 11% à 97% HR (courbe a) et pour un changement d'humidité relative allant de 97% à 11% HR (courbe b), il est obtenu 98% de la déviation en moins de 2 minutes au cours des deux types de changement d'humidité susmentionnés (plus précisément 1 min 43 s pour le changement allant de 11% à 97% HR et 1 min 55 s pour le changement allant de 97% à 11% HR).
Le capteur susmentionné est également soumis, comme représenté sur la figure 3, au cycle suivant (dénommé ci-après cycle A) :

- 1 heure à 11% d'humidité relative ;
- 1 heure à 75% d'humidité relative ;
- 1 heure à 97% d'humidité relative ;
- 1 heure à 75% d'humidité relative ;
- 1 heure à 11% d'humidité relative ;
- 16 heures à 97% d'humidité relative ;
- 1 heure à 75% d'humidité relative ; puis
- 1 heure à 11% d'humidité relative,

l'inverse de la capacité (c'est-à-dire la fréquence) étant mesuré au cours de ce cycle.
Le cycle ci-dessus est utilisé pour caractériser les paramètres les plus importants à considérer lorsque l'on compare des capteurs d'humidité.

a) l'hystérésis à court terme $H_1$, qui est la différence entre les valeurs de fréquence F obtenues à 75% d'humidité relative avant et après un palier séjour de 1 heure à 97% d'humidité relative, soit :

$$H_1 = F_4 - F_2 = 0,5\%$$

b) l'hystérésis maximum $H_2$, qui est la différence entre la valeur à 75% d'humidité relative avant et après un palier séjour de 16 heures à 97% d'humidité relative :

$$H_2 = F_7 - F_2 = 3\%$$

c) la sensibilité S, qui est la différence entre les valeurs de fréquence F obtenues entre la première valeur à 75% d'humidité relative et celle obtenue après un palier séjour de 16 heures à 97% d'humidité relative et la première valeur obtenue après 1 heure à 11% HR :

$$S=(F_6-F_1)/\Delta HR\ max=(F_6 - F_1)/\ (97-11)$$

On peut constater que le capteur conforme à l'invention présente des valeurs d'hystérésis faibles au cours de ce cycle.

Concernant la sensibilité, les capteurs de l'invention présentent une sensibilité de 10% supérieure à celle de capteurs, dont l'élément sensible est réalisé uniquement à partir de polyamide 6 ou de polyamide 6-6.

En parallèle, des capteurs conformes à l'invention identiques à ceux susmentionnés ont été soumis à un cyclage conforme au cycle A susmentionné après 1 mois, 3 mois et 9 mois de cyclage en enceinte climatique suivant le cycle suivant (dénommé également cycle B) :

- une nuit à 10°C sous 30% d'humidité relative ;
- une nuit à 20°C sous 45% d'humidité relative ;
- une nuit à 60°C sous 90% d'humidité relative ;
- une nuit à 20°C sous 45% d'humidité relative,

l'inverse de la capacité étant mesuré au cours dudit cycle A.

Après cyclage en enceinte climatique, l'on peut constater que la sensibilité (déterminée sur la base de la formule exposée ci-dessus) reste constante après 1 mois, 3 mois et 9 mois de cyclage suivant le cycle B.

Pour des capteurs similaires à base de polyamide 6 ou polyamide 6-6, comme l'atteste la figure 4 représentant en ordonnée positive l'évolution de l'hystérésis (respectivement H1 et H2) en fonction du temps (en mois) et en ordonnée négative l'évolution de la sensibilité S (en %) en fonction du temps (en mois), la sensibilité diminue respectivement de 3%, 5% et 10% après un cyclage de 1 mois, 3 mois et 9 mois en enceinte climatique suivant le cycle B.

Quant aux valeurs d'hystérésis, elles augmentent régulièrement au cours du temps, à savoir :

*après 1 mois de cyclage suivant le cycle B, H1 s'élève à 2% et H2 à 4%;
*après 3 mois de cyclage suivant le cycle B, H1 s'élève à 3% et H2 à 6%; et
*après 9 mois de cyclage suivant le cycle B, H1 s'élève à 4% et H2 à 8%.

## Revendications

**1.** Capteur d'humidité comprenant, comme couche absorbante d'humidité, une couche polymérique comprenant un mélange comprenant un premier polyamide et un deuxième polyamide, ledit deuxième polyamide comprenant, dans ses unités répétitives, un nombre d'atomes de carbone supérieur à celui des unités répétitives du premier polyamide, dans lequel le premier polyamide est choisi parmi le polyamide 6, le polyamide 6-6, le polyamide 11 et le deuxième polyamide est choisi parmi le polyamide 6-6, le polyamide 6-10 et le polyamide 12.

**2.** Capteur d'humidité selon la revendication 1, dans lequel la couche polymérique est uniquement constituée de polyamides.

**3.** Capteur d'humidité selon la revendication 1 ou 2, dans lequel la couche polymérique comprend un mélange choisi parmi les mélanges suivants :

- un mélange de polyamide 6 et de polyamide 6-6 ;
- un mélange de polyamide 6 et de polyamide 6-10 ;
- un mélange de polyamide 6-6 et de polyamide 6-10 ;
- un mélange de polyamide 11 et de polyamide 12.

4. Capteur d'humidité selon l'une quelconque des revendications précédentes, dans lequel la couche polymérique comprend un mélange de polyamide 6 et de polyamide 6-6.

5. Capteur d'humidité selon l'une quelconque des revendications précédentes, dans lequel, dans le mélange, le premier polyamide est présent par rapport au deuxième polyamide en une proportion massique allant de 95/5 à 5/95.

6. Capteur d'humidité selon l'une quelconque des revendications précédentes, comprenant au moins une couche polymérique telle que définie selon l'une quelconque des revendications 1 à 5, ladite couche étant disposée entre une première électrode et une deuxième électrode.

7. Capteur d'humidité selon la revendication 6, dans lequel la première électrode et la deuxième électrode sont en contact avec un même substrat.

8. Capteur d'humidité selon l'une quelconque des revendications 1 à 5, comportant une poutre ou membrane recouverte, en tout ou partie, par une couche polymérique telle que définie selon l'une quelconque des revendications 1 à 5.

## Patentansprüche

1. Feuchtigkeitssensor, der als feuchtigkeitsabsorbierende Schicht eine Polymerschicht umfasst, welche eine Mischung umfasst, die ein erstes Polyamid und ein zweites Polyamid umfasst, wobei das zweite Polyamid in seinen Wiederholeinheiten eine Anzahl von Kohlenstoffatomen umfasst, die höher als diejenige der Wiederholeinheiten des ersten Polyamids ist, wobei das erste Polyamid aus Polyamid 6, Polyamid 6-6, Polyamid 11 ausgewählt ist und das zweite Polyamid aus Polyamid 6-6, Polyamid 6-10 und Polyamid 12 ausgewählt ist.

2. Feuchtigkeitssensor nach Anspruch 1, wobei die Polymerschicht ausschließlich aus Polyamiden besteht.

3. Feuchtigkeitssensor nach dem Anspruch 1 oder 2, wobei die Polymerschicht eine Mischung umfasst, die aus den folgenden Mischungen ausgewählt ist:

- einer Mischung aus Polyamid 6 und Polyamid 6-6;
- einer Mischung aus Polyamid 6 und Polyamid 6-10;
- einer Mischung aus Polyamid 6-6 und Polyamid 6-10;
- einer Mischung aus Polyamid 11 und Polyamid 12.

4. Feuchtigkeitssensor nach einem beliebigen der vorhergehenden Ansprüche, wobei die Polymerschicht eine Mischung aus Polyamid 6 und Polyamid 6-6 umfasst.

5. Feuchtigkeitssensor nach einem beliebigen der vorhergehenden Ansprüche, wobei in der Mischung das erste Polyamid gegenüber dem zweiten Polyamid in einem Massenverhältnis im Bereich von 95/5 bis 5/95 vorliegt.

6. Feuchtigkeitssensor nach einem beliebigen der vorhergehenden Ansprüche, welcher mindestens eine Polymerschicht gemäß der Begriffsbestimmung in einem beliebigen der Ansprüche 1 bis 5 umfasst, wobei die Schicht zwischen einer ersten Elektrode und einer zweiten Elektrode angeordnet ist.

7. Feuchtigkeitssensor nach Anspruch 6, wobei die erste Elektrode und die zweite Elektrode mit demselben Substrat in Berührung sind.

8. Feuchtigkeitssensor nach einem beliebigen der Ansprüche 1 bis 5, welcher einen Träger oder eine Membran aufweist, welche(r) vollständig oder teilweise mit einer Polymerschicht gemäß der Begriffsbestimmung in einem beliebigen der Ansprüche 1 bis 5 bedeckt ist.

## Claims

1. A humidity sensor including, as a humidity absorbent layer, a polymer layer including a blend including a first polyamide and a second polyamide, where the said second polyamide includes, in its repetitive units, a number of carbon atoms greater than that of the repetitive units of the first polyamide, in which the first polyamide is chosen

from among polyamide 6, polyamide 6-6 and polyamide 11, and the second polyamide is chosen from among polyamide 6-6, polyamide 6-10 and polyamide 12.

**2.** A humidity sensor according to claim 1, in which the polymer layer consists solely of polyamides.

**3.** A humidity sensor according to any one of claims 1 to 2, in which the polymer layer includes a blend chosen from among the following blends:

- a blend of polyamide 6 and polyamide 6-6;
- a blend of polyamide 6 and polyamide 6-10;
- a blend of polyamide 6-6 and polyamide 6-10;
- a blend of polyamide 11 and polyamide 12.

**4.** A humidity sensor according to any one of the previous claims, in which the polymer layer includes a blend of polyamide 6 and polyamide 6-6.

**5.** A humidity sensor according to any one of the previous claims, in which, in the blend, the first polyamide is present relative to the second polyamide in a mass proportion of between 95/5 and 5/95.

**6.** A humidity sensor according to any one of the previous claims, including at least one polymer layer as defined according to any one of claims 1 to 5, where the said layer is positioned between a first electrode and a second electrode.

**7.** A humidity sensor according to claim 6, in which the first electrode and the second electrode are in contact with the same substrate.

**8.** A humidity sensor according to any one of claims 1 to 5, including a beam or a membrane covered, wholly or partly, by a polymer layer as defined according to any one of claims 1 to 5.

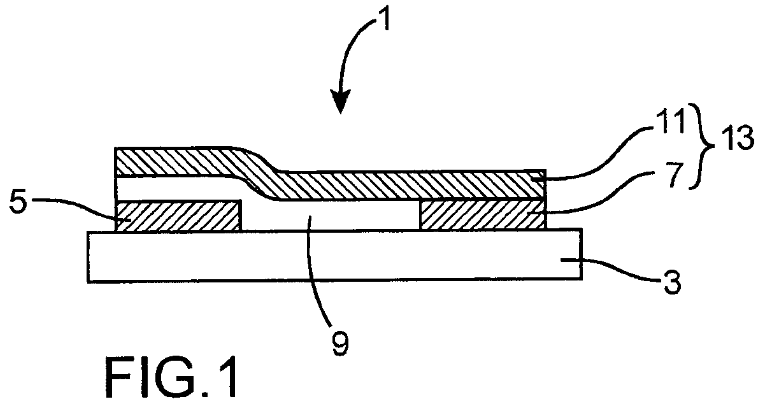
1
11
13
7
5
3
9

FIG.1

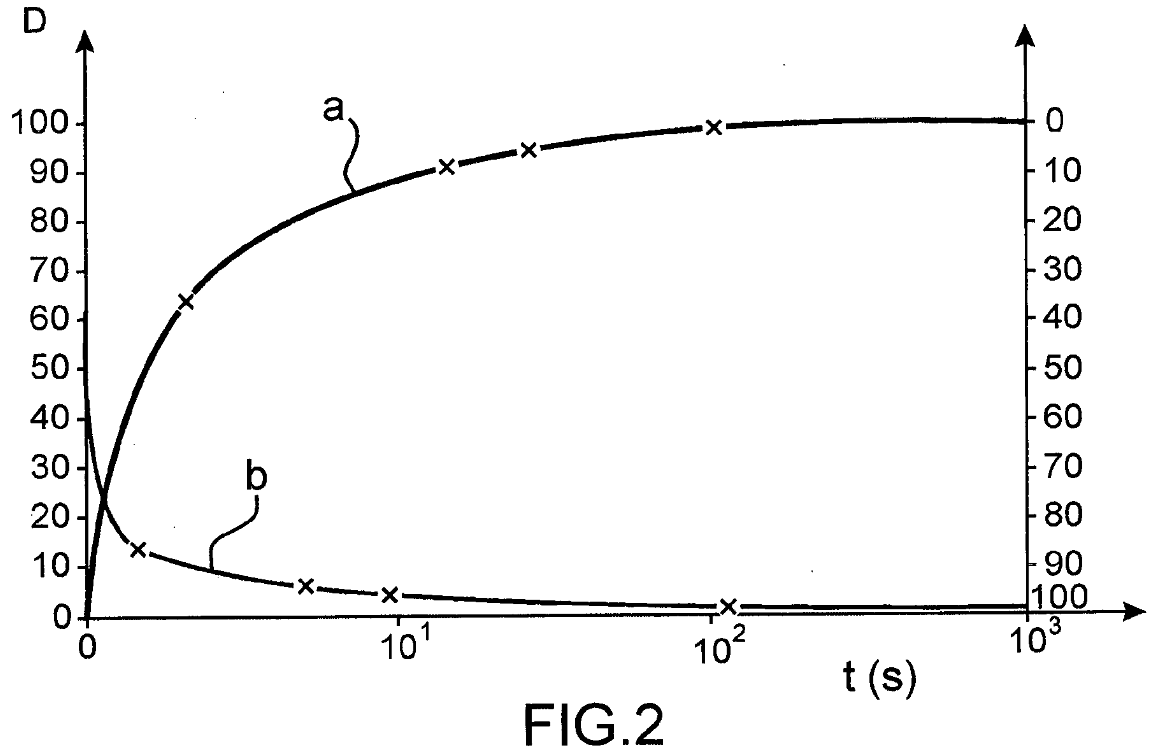
D
a
b
100
90
80
70
60
50
40
30
20
10
0
0
10
20
30
40
50
60
70
80
90
100
0
$10^1$
$10^2$
$10^3$
t (s)

FIG.2

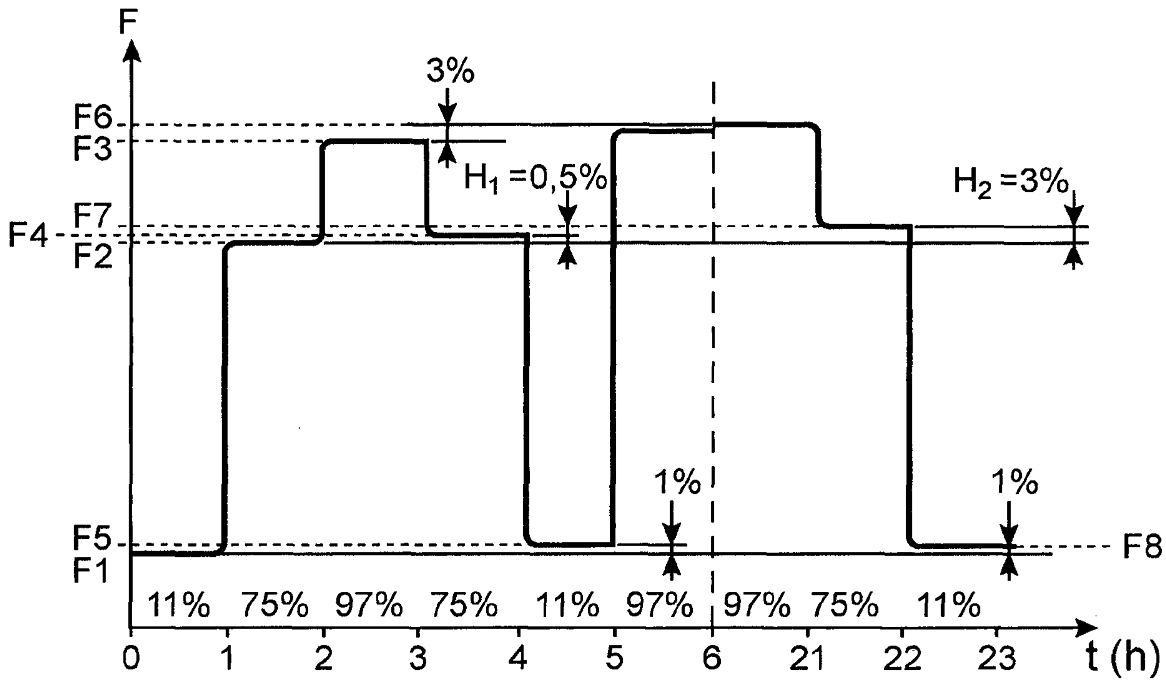
F
3%
F6
F3
H1 =0,5%
H2 =3%
F7
F4
F2
1%
1%
F5
F1
F8
11% 75% 97% 75% 11% 97% 97% 75% 11%
0 1 2 3 4 5 6 21 22 23 t (h)

FIG.3

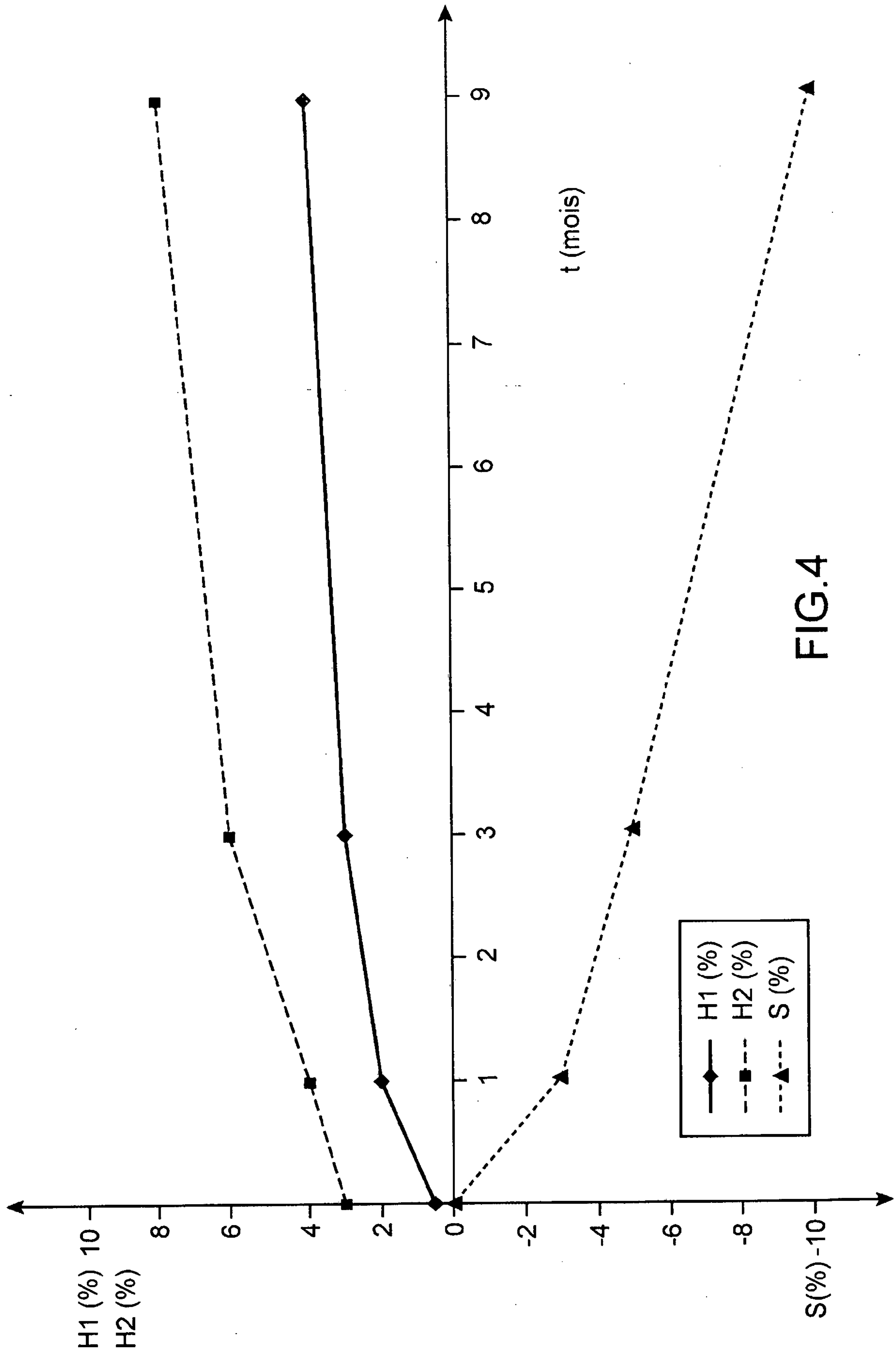


FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

• JP 60066143 B